(19)

Europäisches
Patentamt
European
Patent Office
Office européen
des brevets

(11) **EP 1 789 349 B1**

(12) **EUROPEAN PATENT SPECIFICATION**

(45) Date of publication and mention
of the grant of the patent:
**06.11.2013 Bulletin 2013/45**

(21) Application number: **05766748.7**

(22) Date of filing: **19.07.2005**

(51) Int Cl.:
***B65G 43/10*** (2006.01)

(86) International application number:
**PCT/NL2005/000521**

(87) International publication number:
**WO 2006/014103 (09.02.2006 Gazette 2006/06)**

(54) **METHOD AND APPARATUS FOR BUFFERING PRODUCTS**

VERFAHREN UND VORRICHTUNG ZUM ABPUFFERN VON PRODUKTEN

PROCEDE ET APPAREIL DE SEPARATION DE PRODUITS

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **02.08.2004 NL 1026765**

(43) Date of publication of application:
**30.05.2007 Bulletin 2007/22**

(73) Proprietor: **Vanderlande Industries B.V.
5466 RB Veghel (NL)**

(72) Inventor: **VAN DE VEN, Antonius, Adrianus,
Petrus
NL-5612 LM Eindhoven (NL)**

(74) Representative: **Algemeen Octrooi- en
Merkenbureau B.V.
P.O. Box 645
5600 AP Eindhoven (NL)**

(56) References cited:
**DE-A1- 3 826 872     DE-A1- 4 115 327
US-A- 4 227 607      US-A1- 2002 066 641**

**Description**

The invention provides a method for operating an apparatus for buffering products between a supply conveyor and a discharge conveyor.

The invention further provides an apparatus for buffering products between a supply conveyor and the discharge conveyor, in particular for use in combination with a method according to the invention.

A method and apparatus are known from US patent US-A-4,227,607, which method and apparatus are used in the handling of luggage at airports. Using the same reference numerals that are used in the aforesaid US patent, the known apparatus comprises an input conveyor system comprising three end-to-end input conveyors 16, 15, 14, to which subconveyors 22 connect from check-in counters, via which subconveyors the input conveyor system is fed with luggage in random order. The luggage must be provided with a specific code at a coding station 30 by a coding operator to facilitate the further sorting process of the luggage.

To provide the coding operator with regular flow of luggage, a buffering apparatus is provided between the input conveyor system and the coding station. On the side of the coding station, the buffering apparatus comprises six end-to-end single buffer conveyors 1-6, which are each suitable for supporting one product at a time, whilst on the other side of the input conveyor system the buffering apparatus comprises seven end-to-end multiple buffer conveyors 7-13, which are each suitable for simultaneously supporting a number of products that are different from each other at least as regards their length. The most downstream multiple buffer conveyor 7 connects to the last single buffer conveyor 6. All conveyors 1-16 can be driven individually. Sensors are provided at the downstream end of each of the conveyors 1-14 for sensing the presence of products that are about to be loaded onto the conveyor in question by a respective upstream conveyor.

As long as not all the single buffer conveyors 1-6 are full, the buffering apparatus will operate in the conventional 1 mode of operation. In this mode of operation, the conveyors 7-16 as well as the empty, single buffer conveyors are continuously driven at the same speed. As soon as the coding of luggage on the front buffer conveyor 1 is stopped for whatever reason, all the single buffer conveyors 1-6 will be filled with individual pieces of luggage, as products continue to be supplied from the input conveyor system, and stop. As soon as this situation is reached, the buffering apparatus goes over to the dynamic mode of operation, and the multiple buffer conveyors 7-13 is stopped immediately, no matter whether luggage is present thereon or not. As soon as a new piece of luggage is supplied by the input conveyor system, its presence is sensed by the sensor X14 disposed between the input conveyor 14 and the last multiple buffer conveyor 13. In response thereto, the latter will be set going until the product in question has passed the sensor and is present on the buffer conveyor 13 in its entirety. This process is repeated for each new product that is supplied by the input conveyor system. Once a product present on the buffer conveyor 13 has arrived at the downstream end thereof, this will be sensed by the sensor X13 disposed between the multiple buffer conveyors 12 and 13, in response to which the multiple buffer conveyor 12 is set going until 1 the buffer conveyor 12 has taken over the piece of luggage in question from the buffer conveyor 13. This process is repeated for the other buffer conveyors 7-12 until, in the theoretic, ideal case, the multiple buffer conveyors 7-13 are completely filled with luggage. The multiple buffer conveyor 7 can only be completely filled if, in a non-ideal situation, no luggage was present on the multiple buffer conveyor 7, or only one piece of luggage was present on said multiple buffer conveyor 7 at the upstream end thereof, when the buffering apparatus went over to the dynamic mode of operation. If a piece of luggage is present on the multiple buffer conveyor 7, removed from the upstream end thereof by some distance, at the time of the conversion of the conventional mode of operation to the dynamic mode of operation, it will by definition be impossible to utilize the part of the buffer conveyor 7 upstream of the product in question for buffering products, therefore, in the extreme situation that no discharge of products can take place at the coding station, for example because of a temporary malfunction. In an extreme situation it is even possible that no further buffering of products can take place at all any more and none of the multiple buffer conveyors will be completely filled if a product is present on all the multiple buffer conveyors 7-13, at the downstream end thereof, at the time of the conversion from the conventional mode of operation to the dynamic mode of operation.

If in the interim a piece of luggage is discharged from the first single buffer conveyor 1 to be further handled in a sorting process, all the products that are present on the single buffer conveyors 2-6 will be transported to the downstream buffer conveyors 1-5, after which the buffering apparatus (temporarily) reverts to the conventional mode of operation, until the buffer conveyor 6 is full again and stationary. If this process is repeated and there is no continuous supply of luggage by the input conveyor system to the last multiple buffer conveyor 13, the buffer conveyor 13 cannot remain completely filled.

A typical feature of the buffering apparatus that is known from US-A-4,227,607 is that the buffering of luggage takes place from the upstream end of the buffering apparatus. Another important drawback of this is that there is a significant distance between the downstream end and the buffered luggage at the upstream end of the buffering apparatus, so that the buffering apparatus will not be able to deliver luggage as quickly as is desirable when at some point a rapid flow of luggage is possible at the downstream end of the buffering apparatus.

Another typical feature of the known buffering apparatus is the large number of sensors present between the various conveyors, which sensors are necessary to ensure a correct operation of the buffering apparatus.

The object of the present invention is to provide improvement as regards the above drawbacks. Theoretically, this object could be simply accomplished by using a larger number of single buffer conveyors. This has significant drawbacks as regards the cost price of the buffering apparatus, however, as a result of which such a buffering apparatus would no longer be commercially interesting. Consequently, it is another object of the invention to provide a buffering apparatus whose cost price can be kept at a commercially acceptable level by reducing the required number of components, such as conveyors, drive units for the conveyors and any sensors for sensing the presence of products on the conveyors. To accomplish the above objects, the invention in the first place provides a method according to claim 1. The invention is based on the perception that a precondition for an optimum control of an apparatus for buffering products between a supply conveyor and a discharge conveyor as referred to in the introduction, in which a relatively high degree of capacity utilisation of the buffering apparatus is achieved, is that the control means be provided with information regarding the distribution of products over the individual buffer conveyors, and that the mere supplying of information regarding the presence of products at the downstream end of the individual buffer conveyors to the control means, as in the buffering system according to US-A-4,227,607, will not suffice.

More specifically, the invention achieves that the buffering of products will take place from the downstream end of the buffering apparatus as much as possible. According to the invention the most downstream individual buffer conveyor may be first completely filled with products before a next buffer conveyor disposed further upstream is completely filled with products, while care is taken that no empty support positions that cannot be filled will be formed if the discharge of products via the discharge conveyor should halt for whatever reason. The filling of the buffering apparatus from the most downstream individual buffer conveyor has this advantage that, in the situation in which the buffering apparatus is partially filled (in which case individual buffer conveyors still have empty support positions at the upstream end, therefore), the discharge of products can take place directly when discharge capacity becomes readily available at the discharge conveyor, without the products having to pass support positions that were not filled yet when the discharge capacity in question was not available yet.

The features of the method according to the invention make it possible, in a manner that is simple from the viewpoint of control technique, to fill all the buffer conveyors of the buffering apparatus completely in the extreme situation in which no transfer of products between the buffering apparatus and the discharge conveyor are can take place any more, irrespective of the manner in which products have been presented to the buffering apparatus by the supply conveyor. Said buffering is started at and from the most downstream buffer conveyor, so that the buffering apparatus can quickly respond to a demand for products from the discharge conveyor.

A preferred embodiment of the method according to the invention is characterized by the step of releasing the temporary stoppage of the buffer conveyor in question that was effected once the product in question arrived at the most upstream support position of the multiple buffer conveyor in question after it appeared from the distribution of products over the individual buffer conveyors as determined by the determining means that the total number of empty support positions of the buffer conveyor(s) disposed downstream of the buffer conveyor in question was smaller than the number of products on the buffer conveyor in question, if a new determination by the determining means shows that the most downstream support position of the buffer conveyor in question is still empty and a product is present on the most downstream support position of the buffer conveyor disposed upstream of the buffer conveyor in question. In this preferred embodiment, a respective buffer conveyor is filled from the most upstream support position, possibly until all the support positions of the buffer conveyor in question are filled.

The apparatus according to the invention comprises determining means for determining the distribution of products over the individual buffer conveyors. Said determining of the distribution of products over the individual buffer conveyors is necessary in order to achieve a maximum degree of capacity utilisation, as already explained above with reference to the method according to the invention.

In accordance with the apparatus according to the invention, the control means are adapted for carrying out, while products are being transported via the successive buffer conveyors, after a product has been transferred to a respective multiple buffer conveyor by the buffer conveyor disposed upstream of the buffer conveyor in question, the steps as defined in claim 3.

Furthermore it is preferable that the control means be adapted for releasing the temporary stoppage of the buffer conveyor in question that was effected once the product in question arrived at the most upstream support position of the multiple buffer conveyor in question after it appeared from the distribution of products over the individual buffer conveyors as determined by the determining means that the total number of empty support positions of the buffer conveyor(s) disposed downstream of the buffer conveyor in question is smaller than the number of products on the buffer conveyor in question, if a new determination by the determining means shows that the most downstream support position of the buffer conveyor in question is still empty and a product is present on the most downstream support position of the buffer conveyor disposed upstream of the buffer conveyor in question.

To limit the number of buffer conveyors that are required whilst keeping the negative effect thereof on the flexibility of the buffering apparatus within bounds, the length of the individual buffer conveyors from the discharge conveyor to the supply conveyor preferably remains the same or is increased. This achieves that the relatively short buffer conveyors are positioned at the downstream end of the buffering apparatus, where they can respond to the need for products on the buffering apparatus that exists downstream of the buffering apparatus in a quick and flexible manner. As the distance to the downstream end of the buffering apparatus increases, the buffer conveyors according to the present preferred embodiment will have a greater length, which leads to a less rapid and flexible delivery of products, to be true, but which on the other hand has an advantageous effect on the cost price, in which connection it should be realised that the importance of a rapid and flexible delivery of products by buffer conveyors decreases as the distance from the downstream end of the buffering apparatus increases.

An advantageous use on the length of the buffering apparatus according to the invention is obtained if the length of a multiple buffer conveyor is equal to the length of a number of downstream buffer conveyors connecting to said multiple buffer conveyor. In other words, this implies that the number of support positions of a multiple buffer conveyor equals the sum of the number of support positions of a number of downstream buffer conveyors connecting to the multiple buffer conveyor. In this way the multiple buffer conveyor can be completely "emptied" onto the downstream buffer conveyors in question without any empty spaces remaining thereon.

Quite preferably, the most downstream buffer conveyor is a single buffer conveyor. This increases the possibility that said single buffer conveyor will be full and consequently directly able to transfer a product to the discharge conveyor as soon as the need arises.

Preferably, the determining means comprise sensor means for providing the control means with information regarding the position of products on the supply conveyor. Said information is important when products are taken over from the supply conveyor by the most upstream buffer conveyor.

As soon as products arrive on the last buffer conveyor and the arrival of the products has been sensed, sufficient information is in principle of available for determining the distribution of the products over the various buffer conveyors on the basis of the control of the individual buffer conveyors without the use of further sensors being required. Consequently, another preferred embodiment of the present invention is characterized in that the determining means determine the distribution of products over the individual buffer conveyors on the basis of information about the individual driving actions by the driving means of the buffer conveyors. This preferred embodiment does not rule out the possibility to use one sensor or a number of sensors for products on the buffer conveyors along the length of the buffering apparatus, for example for a verification purpose.

The invention will now be explained in more detail by means of a description of a preferred embodiment of the invention, in which reference is made to the following tables and figures:

Figure 1 schematically shows a buffering apparatus comprising a supply conveyor and a discharge conveyor;
Figure 2 shows, from top to bottom, seventeen successive situations (I-XVII) during the filling of the buffering apparatus of figure 1;
Figure 3 shows eleven successive situations (I-XI) during the emptying of the buffering apparatus of figure 1 after the filling of the buffering apparatus as shown in figure 2.
Table 1 relates to the seventeen situations during the filling of the buffering apparatus as shown in figure 2;
Table 2 relates to the eleven situations during the emptying of the buffering apparatus as shown in figure 3;
Table 3 relates to an alternative control algorithm.

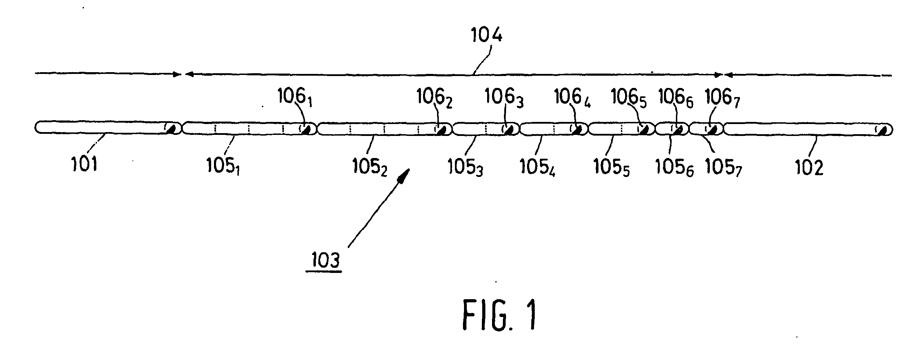

Figure 1 shows a supply conveyor 101, a discharge conveyor 102 and a buffering apparatus 103 disposed therebetween, which extends the length 104. The buffering apparatus 103 comprises seven buffer conveyors $105_i$ (i=1-7). The buffer conveyors $105_i$ each comprise an individual drive unit $106_i$, so that each buffer conveyor $105_i$ can be individually driven independently of the other buffer conveyors $105_i$. A control system (not shown) is provided for individually driving the drive units $106_i$, which control system delivers control signals to the drive units $106_i$.

Each buffer conveyor $105_i$ is configured as an endless conveyor belt that is passed over pulleys at the ends. The buffer conveyors $105_i$ are (partially) different from each other as regards their length. The buffer conveyors $105_1$-$105_5$ are so-called multiple buffer conveyors, because they define a number of (virtual) support positions for products on their upper surface, which enables them to support a number of products simultaneously. More specifically, the buffer conveyors $105_1$, $105_2$ comprise four support positions, whilst the buffer conveyors $105_3$, $105_4$, $105_5$ comprise two support positions. The buffer conveyors $105_6$, $105_7$ are so-called single buffer conveyors, because they each comprise only one support position, so that they are only capable of supporting one product each.

Furthermore, determining means forming part of the control means are provided for determining the distribution of products over the buffer conveyors $105_i$. The control means are preferably provided with a PLC control unit, which determines the distribution of products over the buffer conveyors $105_i$ with a frequency of, for example, 20 times per second on the basis of signals from the drive means $106_i$. Alternatively, or even in combination, the determination of the distribution of products over the buffer conveyors $105_i$ could take place by means of sensors, such as light screens or cameras and/or on the basis of control signals being delivered to the drive means $106_i$. As will become apparent hereinafter, information about said distribution is essential to the invention.

The system as shown in figure 1 is in particular, but not exclusively, suitable for use with products having identical dimensions, for example (empty) containers, also referred to as "tubs", in which pieces of luggage, such as suitcases, can be stored temporarily during the period between the moment a passenger checks in luggage at an airport and the moment the piece of luggage in question is loaded into an aeroplane.

The following equations are relevant for the manner in which the control system controls the individual drive means $106_i$ for individually driving the buffer conveyors $105_i$:

$$\text{n-e.pos.}_{>i} < \text{n-prod.}_i \qquad (1)$$

$$\text{n-e.pos.}_{>i} > \text{n-pos.}_i \qquad (2)$$

$$\text{n-e.pos.}_{>i} = \text{n-prod.}_i \qquad (3)$$

$$\text{n-e.pos.}_{>i} > \text{n-prod.}_i \qquad (4)$$

wherein

n-e.pos.$_{>i}$ is the total number of empty support positions of he buffer conveyor(s) disposed downstream of a buffer conveyor $105_i$
n-prod.$_i$ is the number of products on a buffer conveyor $105_i$
n-pos.$_i$ is the number of support positions of a buffer conveyor $105_i$.

If equation (3) applies, the equations

$$\text{n-prod.}_i = 0 \qquad (3a)$$

$$\text{n-e.pos}_{i+1} \geq \text{n-prod.}_i \qquad (3b)$$

are furthermore relevant, and if equation (4) applies, the equations

$$\text{n-e.pos}_{i+1} > \text{n-prod.}_i \qquad (4a)$$

$$\text{n-prod.}_i = 0 \qquad (4b)$$

are relevant, wherein
n-e.pos$_{i+1}$ is the number of empty support positions of the buffer conveyor $105_{i+1}$ disposed downstream of a buffer conveyor $105_i$.

Depending on which one(s) of the above equations apply (applies) for a respective buffer conveyor $105_i$, a control signal from the control system to the drive means 106, associated with the buffer conveyor 105i in question follows from the equation in question. Using the numbering of the equations as above the following applies in meeting the equations:

• equation (1)

Products are "tacted up" on the buffer conveyor 105i in question. This implies that the buffer conveyor $105_i$ in question is filled from the upstream side by having products wait on the most upstream support position until a next product is supplied from the most downstream support position of the buffer conveyor $105_{i-1}$ (or, for the buffer conveyor $105_i$, until a next product is supplied from the supply conveyor 101), maximally until all the support positions of the buffer

conveyor $105_i$ are filled. If a next product would follow directly, this may in fact imply that the (temporary) stoppage of the buffer conveyor $105_i$ is only necessary after said next products has arrived at the most upstream support position of the buffer conveyor $105_i$.

• equation (2)

The buffer conveyor $105_i$ in question carries any products present thereon forward to the next buffer conveyor $105_{i+1}$ and is also able to receive products from the buffer conveyor $105_{i-1}$.

• equation (3) and equation (3a)

Tacting up as with equation (1). Note: if this equation is met, equation (3b) has become irrelevant.

• equations (3) and (3b)

The buffer conveyor $105_i$ in question carries any products that are present thereon forward to the next buffer conveyor $105_{i+1}$ but is not able to receive products from the buffer conveyor $105_{i+1}$, since this would involve the risk of empty support positions being formed on the buffer conveyor $105_i$ in question in case of a halting discharge of products via the discharge conveyor 102 and a continued supply of products via the supply conveyor 101, so that the buffering apparatus 103 would not be completely filled. This implies that, in spite of the fact that the relevant parameters for a buffer conveyor $105_{i+1}$ allow the transportation of products by said buffer conveyor $105_{i-1}$ and may thus effect the transfer of a product from the most downstream support position of the buffer conveyor $105_{i-1}$ to the most upstream support position of the buffer conveyor $105_i$, the buffer conveyor $105_{i-1}$ is nevertheless stationary. The fact that the buffer conveyor $105_i$ is in a mode of operation in which no products can be received therefore outweighs the fact that the buffer conveyor $105_{i-1}$ is in a mode of operation in which, in accordance with other equations, the transfer of a product to the buffer conveyor $105_{i-1}$ should be possible. If i=1, the supply conveyor 101 can be regarded as the buffer conveyor $105_{i-1}$.

• equation (3) but both equation (3a) and equation (3b), not Tacting up as in equation (1).

• equations (4) and (2).

Logically, n-prod.$_i$ ≤ n-pos., so that both equation (4) and equation (2) may be met. In that case control will take place as in equation (2) as described above.

• equations (4) and (4a)

Transporting and receiving as with equation (2)

• equations (4) and (4b)

Transporting and receiving as with equation (2)

• equation (4) and none of the equations (2), (4a) and (4b)

Transporting and not receiving as with equations (3) and (3b)

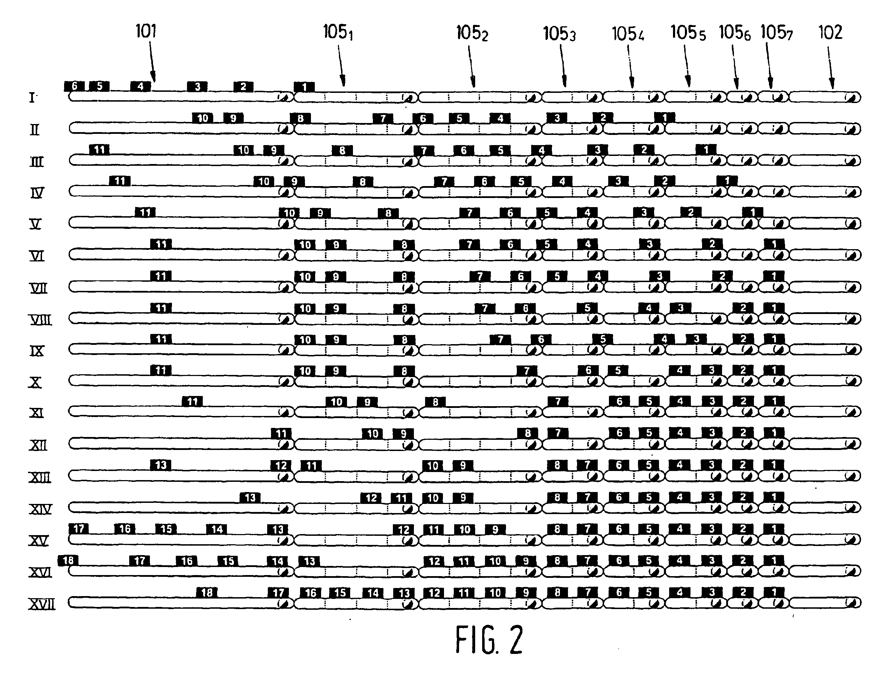

Figure 2 shows 17 successive situations I-XVII during the filling of the buffering apparatus 103, starting from the situation that is shown in figure 1. The parameters that play a part in the above equations are shown in Table 1 for all the situations I-XVII and for all the buffer conveyors (i=1 through i=7). The starting point is that the discharge conveyor 102 is (temporarily) unable to receive products from the buffering apparatus 103. Products 1-18 are supplied to the buffering apparatus 103 in random spaced-apart relationship by the supply conveyor 101. The products 1-16 are successively transported in the direction of the discharge conveyor 102 on the buffering apparatus 103 by the successive buffer conveyors $105_i$, insofar as the number of empty support positions downstream of a respective product 1-16 allows this. On the way, some products 1-16 are stopped (temporarily) so as to enable the buffering apparatus 103 to be completely filled with 16 products, corresponding to the total number of support positions of the buffering apparatus 103. The criteria that apply in that case have been explained in the foregoing with reference to equations (1) - (4), including equations (3a), (3b), (4a) and (4b).
An important decision moment occurs each time a product 1-16 has been transferred to a buffer conveyor $105_i$ and.arrives at the most upstream support position thereof. In principle there are two possibilities in this connection. The

conveyor $105_i$ in question stops (temporarily), or the buffer conveyor $105_i$ does not stop and transports the product in question directly forward in the direction of the next buffer conveyor $105_{i+1}$.

The temporary stoppage of a buffer conveyor $105_i$ takes place for the buffer conveyor $105_5$, for example, after product 3 has arrived at the most upstream support position thereof (situations VII, VII). At that moment, equation (1) applies for the buffer conveyor $105_5$. After all, n-e.pos.$_{>5}$ = 0 and n-prod.$_5$ = 1, so that the equation n-e.pos.$_{>5}$ < n-prod.$_5$ applies at that moment.

As soon as product 9 arrives at the most upstream position of the buffer conveyor $105_2$ (between situation XII and situation XIII), equation (1) also applies for the buffer conveyor $105_2$. However, because product 10 directly follows products 9, product 10 can also be directly taken over by the buffer conveyor $105_2$ from the buffer conveyor $105_1$, without the buffer conveyor $105_2$ being stopped in the interim. The buffer conveyor $105_2$ will stop as soon as product 10 arrives at the most upstream support position of the buffer conveyor $105_2$ (situation XIII). At that point, the buffer conveyor $105_2$ will wait until product 11, in this example directly followed by product 12, arrives at the respective most downstream support positions of the buffer conveyor $105_1$ (situation XIV) and the tacting up of the buffer conveyor $105_2$ can be continued in that product 11 (situation XV) and product 12 (situation XVI) are successively taken over from the buffer conveyor $105_1$ by the buffer conveyor $105_2$.

An important advantage of the present invention is the fact that the buffering apparatus 103 will be completely filled, irrespective of the time intervals at which products are being supplied to the buffering apparatus via the supply conveyor 101, even if the discharge of products via the discharge conveyor 102 is fully halted, as will be apparent from situation XVII. The buffering of the products will take place on the buffer conveyors $105_i$ downstream in the buffering apparatus 103 as much as possible, without the risk that empty support positions will be formed when the discharge of products is fully halted. This is achieved in particular by transferring products from a buffer conveyor $105_i$ to a next buffer conveyor $105_{i+1}$ only at suitable moments.

Illustrative in this connection is, for example, the buffer conveyor $105_1$, which will stop as soon as products 8 arrives at the most downstream position on the buffer conveyor $105_1$ (situation VI). At that moment, equation (4) applies for the buffer conveyor $105_2$, whereas equations (2) and (4a) do not. This implies that the buffer conveyor $105_2$ transports the products present thereon to the next buffer conveyor $105_3$ but is (temporarily) unable to receive the next product 8 from the buffer conveyor $105_1$. This in turn implies that the supply conveyor 101 is temporarily stopped, partially because product 10 has not been completely transferred and is only set moving again from the situation X, in which equations (2) and (4) apply for the buffer conveyor $105_1$. Equation (3b) also applies in this case, to be true, but it is only relevant in those cases in which equation (3) applies. In case of a complete transfer of product 10 to the buffer conveyor $105_1$, the supply conveyor 101 would continue from situation VI until product 11 has arrived at the downstream end of the supply conveyor 101 and the buffer conveyor $105_1$ is able to receive a new product again and the transfer of product 11 to the buffer conveyor $105_1$ can directly take place.

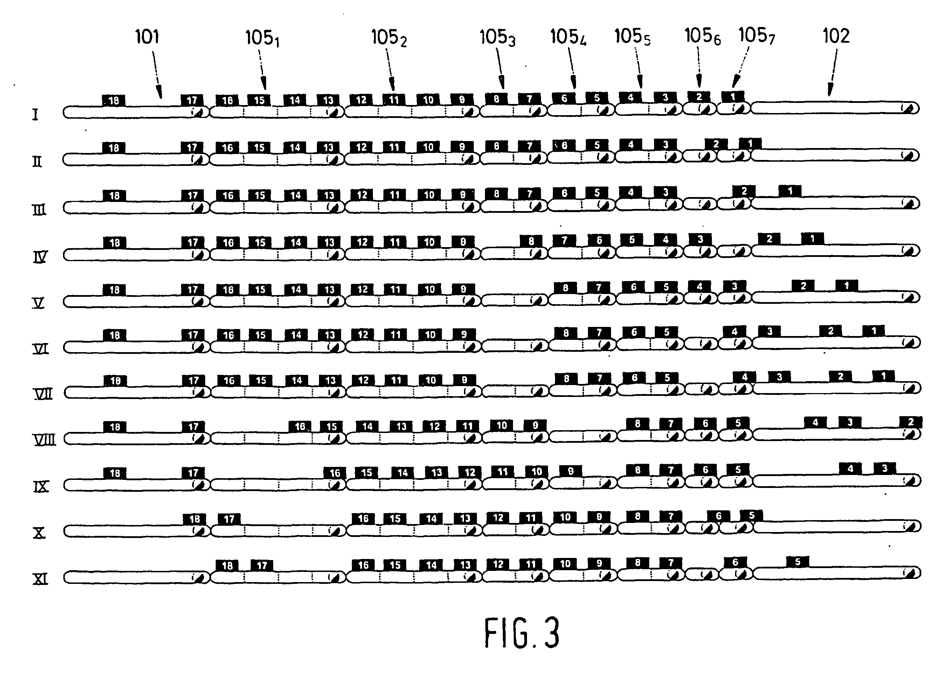

Figure 3 shows 11 successive situations I-XI during the emptying of the buffering apparatus 103. Situation I in figure 3 corresponds to situation XVII in figure 2. For reasons that are not relevant in this connection, the discharge conveyor 102 is able to receive products again. From that moment the buffer conveyors $105_6$ and $105_7$ are activated again and thus emptied (situation III). Equations (4) and (4b) apply for the buffer conveyor $105_6$ at that moment, so that said buffer conveyor is able to receive products. Equation (3) applies for the buffer conveyor $105_5$ at that moment, whereas equations (3a) and (3b) do not, which implies that said buffer conveyor $105_5$ will tact up products. As soon as products 3-8 have been moved over a distance corresponding to that of two support positions (and the buffer conveyor $105_3$ is empty, therefore), as is shown in situation V, the buffer conveyors $105_4$ and $105_5$ are stopped temporarily, since equation (1) applies for both buffer conveyors in that case, and the buffer conveyors $105_6$ en $105_7$ are emptied onto the discharge conveyor 102. In a similar manner, the remaining products 5-18 are emptied in accordance with the criteria as explained in the foregoing with reference to equations (1) through (4) and (3a), (3b), (4a) and (4b).

According to an alternative method for operating an apparatus for buffering products, which is not part of the present invention, the parameter "available positions" for a respective buffer conveyor i is relevant, which parameter will be designated $AP_i$ hereinafter. $AP_i$ is defined as follows:
if

$$AP_{i+1} < \text{n-prod}_i \qquad\qquad (5)$$

$$AP_i = \text{n-e.pos.}_i \qquad\qquad (6)$$

otherwise

$$AP_i = AP_{i+1} + n\text{-}e.pos._i \qquad\qquad (7)$$

wherein

$n\text{-}e.pos._i$ is the total number of empty support positions of the buffer conveyor $105_i$.

Using the above equations (5) through (7), the AP values for i=7 through i=1 are successively determined. Subsequently, the following equations become relevant:

$$AP_{i+1} > n\text{-}prod._i \qquad\qquad (8)$$

$$AP_{i+1} < n\text{-}prod._i \qquad\qquad (9)$$

$$AP_{i+1} = n\text{-}prod._i \qquad\qquad (10)$$

wherein equation (9) applies for the most downstream buffer conveyor 105,at all times. If equation (8) or (10) applies, the following equation will furthermore be relevant:

$$n\text{-}pos._{i-1} = n\text{-}prod._{i-1} \qquad\qquad (11)$$

wherein

$n\text{-}pos._{i-1}$ is the number of support positions of the buffer conveyor $105_{i-1}$

$n\text{-}prod._{i-1}$ is the number of products on the buffer conveyor $105_{i-1}$

If equation (10) applies, the following equation is moreover relevant:

$$n\text{-}pos._i = n\text{-}prod._i \qquad\qquad (12)$$

If equation (11) and/or (12) applies, this in fact means that the buffer conveyor $105_{i-1}$ and/or the buffer conveyor $105_i$, respectively, is (are) full.

Depending on which one(s) of the equations (8) through (12) applies (apply), the buffer conveyors $105_i$ are driven, in which connection substantially three modes can be distinguished, only one of which can apply at any point in time for the buffer conveyors $105_i$:

transport: the buffer conveyor $105_i$ in question unconditionally forwards each product directly to the next buffer conveyor $105_{i+1}$;

inch: the buffer conveyor $105_i$ in question tacts up products as described above for the situation in which equation (1) applies;

train: a distinction can be made between the sub-modes:

accept train the buffer conveyor $105_i$ in question is able to receive all products from the completely filled buffer conveyor $105_{i-1}$ without any intervals;

release train the buffer conveyor $105_i$ in question is completely filled with products and is able to deliver said products to the next buffer conveyor $105_{i+1}$ without any intervals;

The method of control can be summarized as in Table 3, going through the successive lines I - VI for each control routine but reverting to line I as soon as the conditions set for a line are met.

The supplying and discharging of products as explained with reference to figures 1-3 for the first control system, which makes use of equations (1) through (4b), will take place at least substantially in the same way if the above-described alternative control system is used, which makes use of equations (5) through (12). That is, the forming of support positions that cannot be filled is prevented in the situation in which the discharge of products via the discharge conveyor 102 is not possible for a prolonged period of time, whereas products continue to be supplied via the supply conveyor 101. Moreover, in that case the buffering of products will take place by filling the buffer conveyors $105_i$ in succession from the most downstream buffer conveyor $105_7$ in the direction of the most upstream buffer conveyor $105_1$, so that, once the discharge of products via the discharge conveyor 102 becomes possible again, the products will be moved onto the discharge conveyor 102 as quickly as possible from the buffering apparatus 103. For Table 1 it applies that the value of n-e.pos.$_{>i}$ equals $AP_i$ during the filling of the buffer conveyors $105_i$. In table 2 said values vary for some situations, as is shown in table 2.

Table 1

| | | Buffer conveyor i | | | | | | |
|---|---|---|---|---|---|---|---|---|
| | | i = 1 | = 2 | i = 3 | i = 4 | i = 5 | i = 6 | i = 7 |
| n-pos.$_i$ | | 4 | 4 | 2 | 2 | 2 | 1 | 1 |
| situation | | | | | | | | |
| I | n-prod.$_i$ | 1 | 0 | 0 | 0 | 0 | 0 | 0 |
| | n-e.pos.$_{i+1}$ | 4 | 2 | 2 | 2 | 1 | 1 | - |
| | n-e.pos.$_{>i}$/$AP_i$ | 12 | 8 | 6 | 4 | 2 | 1 | - |
| II | n-prod., | 2 | 3 | 1 | 1 | 1 | 0 | 0 |
| | n-e.pos.$_{i+1}$ | 1 | 1 | 1 | 1 | 1 | 1 | - |
| | n-e.pos.$_{>i}$/$AP_i$ | 6 | 5 | 4 | 3 | 2 | 1 | - |
| III | n-prod.$_i$ | 1 | 3 | 1 | 2 | 1 | 0 | 0 |
| | n-e.pos.$_{i+1}$ | 1 | 1 | 0 | 1 | 1 | 1 | - |
| | n-e.pos.$_{>i}$/$AP_i$ | 5 | 4 | 3 | 3 | 2 | 1 | - |
| IV | n-prod.$_i$ | 2 | 3 | 1 | 1 | 1 | 1 | 0 |
| | n-e.pos.$_{i+1}$ | 1 | 1 | 1 | 1 | 0 | 1 | - |
| | n-e.pos.$_{>i}$/$AP_i$ | 5 | 4 | 3 | 2 | 1 | 1 | - |
| V | n-prod.$_i$ | 3 | 2 | 2 | 1 | 1 | 0 | 1 |
| | n-e.pos.$_{i+1}$ | 2 | 0 | 1 | 1 | 0 | 1 | - |
| | n-e.pos.$_{>i}$/$AP_i$ | 5 | 3 | 3 | 2 | 1 | 0 | - |
| VI | n-prod.$_i$ | 3 | 2 | 2 | 1 | 1 | 0 | 1 |
| | n-e.pos.$_{i+1}$ | 2 | 0 | 1 | 1 | 1 | 0 | - |
| | n-e.pos.$_{>i}$/$AP_i$ | 5 | 3 | 3 | 2 | 1 | 0 | - |
| VII | n-prod.$_i$ | 3 | 2 | 1 | 1 | 1 | 1 | 1 |
| | n-e.pos.$_{i+1}$ | 2 | 0 | 1 | 1 | 1 | 0 | - |
| | n-e.pos.$_{>i}$/$AP_i$ | 5 | 3 | 2 | 1 | 0 | 0 | - |
| VIII | n-prod.$_i$ | 3 | 2 | 1 | 1 | 1 | 1 | 1 |
| | n-e.pos.$_{i+1}$ | 2 | 1 | 1 | 1 | 0 | 0 | - |
| | n-e.pos.$_{>i}$/$AP_i$ | 5 | 3 | 2 | 1 | 0 | 0 | - |
| IX | n-prod., | 3 | 1 | 1 | 1 | 2 | 1 | 1 |
| | n-e.pos.$_{i+1}$ | 3 | 1 | 1 | 0 | 0 | 0 | - |
| | n-e.pos.$_{i+1}$/$AP_i$ | 5 | 2 | 1 | 0 | 0 | 0 | - |
| X | n-prod.$_i$ | 3 | 1 | 1 | 1 | 2 | 1 | 1 |
| | n-e.pos.$_{i+1}$ | 3 | 1 | 1 | 0 | 0 | 0 | - |
| | n-e.pos.$_{>i}$/$AP_i$ | 5 | 2 | 1 | 0 | 0 | 0 | 0 |

(continued)

| | | | | | | | | |
|---|---|---|---|---|---|---|---|---|
| n-pos.$_i$ | | 4 | 4 | 2 | 2 | 2 | 1 | 1 |
| situation | | | | | | | | |
| XI | n-prod.$_i$ | 2 | 1 | 1 | 2 | 2 | 1 | 1 |
| | n-e.pos.$_{i+1}$ | 3 | 1 | 0 | 0 | 0 | 0 | - |
| | n-e.pos.$_{>i}$/AP$_i$ | 4 | 1 | 0 | 0 | 0 | 0 | - |
| XII | n-prod., | 2 | 1 | 1 | 2 | 2 | 1 | 1 |
| | n-e.pos.$_{i+1}$ | 3 | 1 | 0 | 0 | 0 | 0 | - |
| | n-e.pos.$_{>i}$/AP$_i$ | 4 | 1 | 0 | 0 | 0 | 0 | 0 |
| XIII | n-prod.$_i$ | 2 | 2 | 2 | 2 | 2 | 1 | 1 |
| | n-e.pos.$_{i+1}$ | 2 | 0 | 0 | 0 | 0 | 0 | - |
| | n-e.pos.$_{>i}$/AP$_i$ | 2 | 0 | 0 | 0 | 0 | 0 | 0 |
| XIV | n-prod.$_i$ | 2 | 2 | 2 | 2 | 2 | 1 | 1 |
| | n-e.pos.$_{i+1}$ | 2 | 0 | 0 | 0 | 0 | 0 | - |
| | n-e.pos.$_{>i}$/AP$_i$ | 2 | 0 | 0 | 0 | 0 | 0 | 0 |
| XV | n-prod.$_i$ | 1 | 3 | 2 | 2 | 2 | 1 | 1 |
| | n-e.pos.$_{i+1}$ | 1 | 0 | 0 | 0 | 0 | 0 | - |
| | n-e.pos.$_{>i}$/AP$_i$ | 1 | 0 | 0 | 0 | 0 | 0 | 0 |
| XVI | n-prod.$_i$ | 1 | 4 | 2 | 2 | 2 | 1 | 1 |
| | n-e.pos.$_{i+1}$ | 0 | 0 | 0 | 0 | 0 | 0 | - |
| | n-e.pos.$_{>i}$/AP$_i$ | 0 | 0 | 0 | 0 | 0 | 0 | 0 |
| XVII | n-prod.$_i$ | 4 | 4 | 2 | 2 | 2 | 1 | 1 |
| | n-e.pos.$_{i+1}$ | 0 | 0 | 0 | 0 | 0 | 0 | - |
| | n-e.pos.$_{>i}$/AP$_i$ | 0 | 0 | 0 | 0 | 0 | 0 | 0 |

Table 2

| | | Buffer conveyor i | | | | | | |
|---|---|---|---|---|---|---|---|---|
| | | i = 1 | i = 2 | i = 3 | i = 4 | i = 5 | i = 6 | i = 7 |
| n-pos., | | 4 | 4 | 2 | 2 | 2 | 1 | 1 |
| situation | | | | | | | | |
| I | n-prod., | 4 | 4 | 2 | 2 | 2 | 1 | 1 |
| | n-e.pos$_{i+1}$ | 0 | 0 | 0 | 0 | 0 | 0 | - |
| | n-e.pos.$_{>1}$ | 0 | 0 | 0 | 0 | 0 | 0 | - |
| | AP$_i$ | 0 | 0 | 0 | 0 | 0 | 0 | - |
| II | n-prod., | 4 | 4 | 2 | 2 | 2 | 0 | 1 |
| | n-e.pos$_{i+1}$ | 0 | 0 | 0 | 0 | 1 | 0 | - |
| | n-e.pos.$_{>i}$ | 1 | 1 | 1 | 1 | 1 | 0 | - |
| | AP$_i$ | 0 | 0 | 0 | 0 | 1 | 0 | - |

(continued)

| | | n-pos., | 4 | 4 | 2 | 2 | 2 | 1 | 1 |
|---|---|---|---|---|---|---|---|---|---|
| | | situation | | | | | | | |
| III | | n-prod.$_i$ | 4 | 4 | 2 | 2 | 2 | 0 | 0 |
| | | n-e.pos$_{i+1}$ | 0 | 0 | 0 | 0 | 1 | 0 | - |
| | | n-e.pos.$_{>i}$ | 2 | 2 | 2 | 2 | 2 | 1 | - |
| | | AP$_i$ | 2 | 2 | 2 | 2 | 2 | 1 | - |
| IV | | n-prod.$_i$ | 4 | 4 | 1 | 2 | 2 | 1 | 0 |
| | | n-e.pos$_{i+1}$ | 0 | 1 | 0 | 0 | 0 | 1 | - |
| | | n-e.pos.$_{>i}$ | 2 | 2 | 1 | 1 | 1 | 1 | - |
| | | AP$_i$ | 0 | 1 | 0 | 0 | 1 | 1 | - |
| V | | n-prod.$_i$ | 4 | 4 | 0 | 2 | 2 | 1 | 1 |
| | | n-e.pos$_{i+1}$ | 0 | 2 | 0 | 0 | 0 | 0 | - |
| | | n-e.pos.$_{>i}$ | 2 | 2 | 0 | 0 | 0 | 0 | - |
| | | AP$_i$ | 0 | 2 | 0 | 0 | 0 | 0 | - |
| VI | | n-prod., | 4 | 4 | 0 | 2 | 2 | 0 | 1 |
| | | n-e.pos$_{i+1}$ | 0 | 2 | 0 | 0 | 1 | 0 | - |
| | | n-e.pos.$_{>i}$ | 3 | 3 | 1 | 1 | 1 | 0 | - |
| | | AP$_i$ | 0 | 2 | 0 | 0 | 1 | 0 | - |
| VII | | n-prod.$_i$ | 4 | 4 | 0 | 2 | 2 | 0 | 0 |
| | | n-e.pos$_{i+1}$ | 0 | 2 | 0 | 0 | 1 | 1 | - |
| | | n-e.pos.$_{>i}$ | 4 | 4 | 2 | 2 | 2 | 1 | - |
| | | AP$_i$ | 4 | 4 | 2 | 2 | 2 | 1 | - |
| VIII | | n-prod.$_i$ | 2 | 4 | 2 | 0 | 2 | 1 | 1 |
| | | n-e.pos$_{i+1}$ | 0 | 0 | 2 | 0 | 0 | 0 | - |
| | | n-e.pos.$_{>i}$ | 2 | 2 | 2 | 0 | 0 | 0 | - |
| | | AP$_i$ | 0 | 2 | 2 | 0 | 0 | 0 | - |
| IX | | n-prod.$_i$ | 1 | 4 | 2 | 1 | 2 | 1 | 1 |
| | | n-e.pos$_{i+1}$ | 0 | 0 | 1 | 0 | 0 | 0 | - |
| | | n-e.pos.$_{>i}$ | 1 | 1 | 1 | 0 | 0 | 0 | - |
| | | AP$_i$ | 0 | 0 | 1 | 0 | 0 | 0 | - |
| X | | n-prod.$_i$ | 1 | 4 | 2 | 2 | 2 | 0 | 1 |
| | | n-e.pos$_{i+1}$ | 0 | 0 | 0 | 0 | 1 | 0 | - |
| | | n-e.pos.$_{>i}$ | 1 | 1 | 1 | 1 | 1 | 0 | - |
| | | AP$_i$ | 0 | 0 | 0 | 0 | 1 | 1 | - |
| XI | | n-prod.$_i$ | 2 | 4 | 2 | 2 | 2 | 1 | 1 |
| | | n-e.pos$_{i+1}$ | 0 | 0 | 0 | 0 | 1 | 0 | - |
| | | n-e.pos.$_{>i}$ | 1 | 1 | 1 | 1 | 1 | 0 | - |
| | | AP$_i$ | 0 | 0 | 0 | 0 | 1 | 0 | - |

Table 3

| | -8 | -9 | -10 | -11 | -12 | Transport | Inch | Train | |
|---|---|---|---|---|---|---|---|---|---|
| | | | | | | | | Accept | Release |
| I | + | | | + | | | | v | v |
| II | + | | | - | | v | | | |
| III | | + | | | | | v | | |
| IV | | | + | + | + | | | v | v |
| V | | | + | - | + | | | | v |
| VI | | | + | | - | v | | | |

**Claims**

1. A method for operating an apparatus for buffering products between a supply conveyor and a discharge conveyor, said apparatus comprising individual end-to-end buffer conveyors, at least some of which are multiple buffer conveyors, which each comprise a number of support positions for simultaneously supporting a number of products maximally equal to the number of support positions, drive means for individually driving the buffer conveyors and control means for delivering control signals to the drive means for filling and emptying the individual buffer conveyors by individually driving the buffer conveyors, said method comprising the successive steps of

   - receiving products from the supply conveyor on the most upstream buffer conveyor of the buffering apparatus,
   - conveying products from the most upstream buffer conveyor of the buffering apparatus to the most downstream buffer conveyor via the successive buffer conveyors, and
   - delivering products from the most downstream buffer conveyor to the discharge conveyor,
   - determining the distribution of products over the individual buffer conveyors by determining means, wherein the

   following steps are to be carried out while products are being transported via the successive buffer conveyors, after a product has been transferred to a respective multiple buffer conveyor by the buffer conveyor disposed upstream of the buffer conveyor in question:

   - stopping the buffer conveyor in question temporarily once the product in question has arrived at the most upstream support position of the multiple buffer conveyor in question if it appears from the distribution of products over the individual buffer conveyors as determined by the determining means that $n\text{-}e.pos._{>i} < n\text{-}prod._i$, wherein $n\text{-}e.pos._{>i}$ is the total number of empty support positions of the buffer conveyor(s) disposed downstream of the buffer conveyor in question and wherein $n\text{-}prod._i$ is the number of products present on the buffer conveyor in question or if it appears that $n\text{-}e.pos._{>i} = n\text{-}prod.$, and that $n\text{-}prod._i = 0$,
   or if it appears that $n\text{-}e.pos._{>i} = n\text{-}prod.$, and that $n\text{-}e.pos._{i+1} < n\text{-}prod.$, and that $n\text{-}prod., > 0$, wherein $n\text{-}e.pos._{i+1}$ is the total number of empty support positions of the buffer conveyor disposed downstream of the buffer conveyor in question;
   - transporting the product to the buffer conveyor disposed downstream of the buffer conveyor in question, without waiting for the arrival of a next product on the buffer conveyor in question, if it appears from the distribution of products over the individual buffer conveyors as determined by the determining means that $n\text{-}e.pos._{>i} > n\text{-}pos._i$, wherein $n\text{-}pos._i$ is the number of support positions of the buffer conveyor in question,
   or if it appears that $n\text{-}e.pos._{>i} > n\text{-}prod.$, and that $n\text{-}e.pos._{i+1} > n\text{-}prod.$, and that $n\text{-}e.pos._{>1} \leq n\text{-}pos._i$,
   or if it appears that $n\text{-}e.pos._{>i} > n\text{-}prod.$, and that $n\text{-}prod._i = 0$ and that $n\text{-}e.pos._{>i} \leq n\text{-}pos._i$;
   - transporting the product to the buffer conveyor disposed downstream of the buffer conveyor in question and keeping the buffer conveyor disposed upstream of the buffer conveyor in question stationary,
   if it appears from the distribution of products over the individual buffer conveyors as determined by the determining means that $n\text{-}e.pos._{>i} = n\text{-}prod.$, and that $n\text{-}e.pos._{i+1} \geq n\text{-}prod.$, and that $n\text{-}prod., > 0$,
   or if it appears that $n\text{-}e.pos._{>1} > n\text{-}prod._i$ and that $n\text{-}e.pos._{>i} \leq n\text{-}pos.$, and that $n\text{-}e.pos._{i+1} \leq n\text{-}prod.$, and that $n\text{-}prod., > 0$.

**2.** A method according to claim 1, **characterized by** the step of releasing the temporary stoppage of the buffer conveyor in question that was effected once the product in question arrived at the most upstream support position of the multiple buffer conveyor in question after it appeared from the distribution of products over the individual buffer conveyors as determined by the determining means that the total number of empty support positions of the buffer conveyor(s) disposed downstream of the buffer conveyor in question was smaller than the number of products on the buffer conveyor in question, if a new determination by the determining means shows that the most downstream support position of the buffer conveyor in question is still empty and a product is present on the most downstream support position of the buffer conveyor disposed upstream of the buffer conveyor in question.

**3.** An apparatus for buffering products between a supply conveyor and the discharge conveyor, in particular for use in combination with a method according to any one of the preceding claims, said apparatus comprising individual end-to-end buffer conveyors, at least some of which are multiple buffer conveyors, which each comprise a number of support positions for simultaneously supporting a number of products maximally equal to the number of support positions, drive means for individually driving the buffer conveyors and control means for delivering control signals to the drive means for filling and emptying the individual buffer conveyors by individually driving the buffer conveyors, wherein determining means are provided for determining the distribution of products over the individual buffer conveyors, wherein the control means are adapted for carrying out, while products are being transported via the successive buffer conveyors, after a product has been transferred to a respective multiple buffer conveyor by the buffer conveyor disposed upstream of the buffer conveyor in question, the steps of:

- stopping the buffer conveyor in question temporarily once the product in question has arrived at the most upstream support position of the multiple buffer conveyor in question if it appears from the distribution of products over the individual buffer conveyors as determined by the determining means that $\text{n.e.pos.}_{>i} < \text{n-prod.}_i$, wherein $\text{n-e.pos.}_{>i}$ is the total number of empty support positions of the buffer conveyor(s) disposed downstream of the buffer conveyor in question and wherein $\text{n-prod.}_i$ is the number of products on the buffer conveyor in question, or if it appears that $\text{n-e.pos.}_{>i} = \text{n-prod.}_i$ and that $\text{n-prod.}_i = 0$,
or if it appears that $\text{n-e.pos.}_{>i} = \text{n-prod.}$, and that $\text{n-e.pos.}_{i+1} < \text{n-prod.}$, and that $\text{n-prod.}_i > 0$, wherein $\text{n-e.pos.}_{i+1}$ is the total number of empty support positions of the buffer conveyor disposed downstream of the buffer conveyor in question;
- transporting the product to the buffer conveyor disposed downstream of the buffer conveyor in question, without waiting for the arrival of a next product on the buffer conveyor in question, if it appears from the distribution of products over the individual buffer conveyors as determined by the determining means that $\text{n-e.pos.}_{>i} > \text{n-pos.}_i$, wherein $\text{n-pos.}_i$ is the number of support postitions of the buffer conveyor in question, or if it appears that $\text{n-e.pos.}_{>1} > \text{n-prod.}_i$ and that $\text{n-e.pos.}_{i+1} > \text{n-prod.}$, and that $\text{n-e.pos.}_{>i} \leq \text{n-pos.}_i$,
or if it appears that $\text{n-e.pos.}_{>i} > \text{n-prod.}$, and that $\text{n-prod.}_i = 0$ and that $\text{n-e.pos.}_{>i} \leq \text{n-pos.}_i$;
- transporting the product to the buffer conveyor disposed downstream of the buffer conveyor in question and keeping the buffer conveyor disposed upstream of the buffer conveyor in question stationary,
if it appears from the distribution of products over the individual buffer conveyors as determined by the determining means that $\text{n-e.pos.}_{>i} = \text{n-prod.}$, and that $\text{n-e.pos.}_{i+1} \geq \text{n-prod.}$, and that $\text{n-prod.}, > 0$,
or if it appears that $\text{n-e.pos.}_{>i} > \text{n-prod.}$, and that $\text{n-e.pos.}_{>i} \leq \text{n-pos.}$, and that $\text{n-e.pos.}_{i+1} \leq \text{n-prod.}_i$ and that $\text{n-prod.}, > 0$.

**4.** An apparatus according to claim 3, **characterized in that** the control means are adapted for releasing the temporary stoppage of the buffer conveyor in question that was effected once the product in question arrived at the most upstream support position of the multiple buffer conveyor in question after it appeared from the distribution of products over the individual buffer conveyors as determined by the determining means that the total number of empty support positions of the buffer conveyor(s) disposed downstream of the buffer conveyor in question was smaller than the number of products on the buffer conveyor in question, if a new determination by the determining means shows that the most downstream support position of the buffer conveyor in question is still empty and a product is present on the most downstream support position of the buffer conveyor disposed upstream of the buffer conveyor in question.

**5.** An apparatus according to claim 3 or 4, **characterized in that** the length of the individual buffer conveyors from the discharge conveyor to the supply conveyor remains the same or is increased.

**6.** An apparatus according to any one of the claims 3-5, **characterized in that** the length of a multiple buffer conveyor is equal to the length of a number of downstream buffer conveyors connecting to said multiple buffer conveyor.

**7.** An apparatus according to any one of the claims 3-6, **characterized in that** the most downstream buffer conveyor is a single buffer conveyor.

8.  An apparatus according to any one of the claims 4-7, **characterized in that** the determining means comprise sensor means for providing the control means with information regarding the position of products on the supply conveyor.

9.  An apparatus according to any one of the claims 3-8, **characterized in that** the determining means determine the distribution of products over the individual buffer conveyors on the basis of information about the individual driving actions by the driving means of the buffer conveyors.

## Patentansprüche

1.  Verfahren zum Betreiben einer Vorrichtung zum Puffern von Produkten zwischen einem Zufuhrförderer und einem Abfuhrförderer, wobei die Vorrichtung Folgendes umfasst: individuelle End-to-End-Pufferförderer, von denen wenigstens einige Mehrfach-Pufferförderer sind, die jeweils eine Anzahl von Tragpositionen zum gleichzeitigen Tragen einer Anzahl von Produkten umfassen, die maximal gleich der Anzahl von Tragpositionen ist, Antriebsmittel zum individuellen Antreiben der Pufferförderer und Steuermittel zum Anlegen von Steuersignalen an die Antriebsmittel zum Füllen und Leeren der individuellen Pufferförderer durch individuelles Antreiben der Pufferförderer, wobei das Verfahren die folgenden aufeinander folgenden Schritte beinhaltet:

    - Annehmen von Produkten von dem Zufuhrförderer auf dem am weitesten stromaufwärts gelegenen Pufferförderer der Puffervorrichtung,
    - Fördern von Produkten von dem am weitesten stromaufwärts gelegenen Pufferförderer der Puffervorrichtung zu dem am weitesten stromabwärts gelegenen Pufferförderer über die aufeinander folgenden Pufferförderer, und
    - Liefern von Produkten von dem am weitesten stromabwärts gelegenen Pufferförderer zum Abfuhrförderer,
    - Ermitteln der Verteilung von Produkten über die individuellen Pufferförderer durch Ermittlungsmittel,

    wobei die folgenden Schritte auszuführen sind, während Produkte über die aufeinander folgenden Pufferförderer transportiert werden, nachdem ein Produkt zu einem jeweiligen Mehrfach-Pufferförderer durch den stromaufwärts des fraglichen Pufferförderers befindlichen Pufferförderer übertragen wurde:

    - vorübergehendes Stoppen des fraglichen Pufferförderers, wenn das fragliche Produkt an der am weitesten stromaufwärts gelegenen Tragposition des fraglichen Mehrfach-Pufferförderers angekommen ist, wenn es anhand der Verteilung von Produkten über die individuellen Pufferförderer gemäß Ermittlung durch das Ermittlungsmittel den Anschein hat, dass $\text{n-e.pos.}_{>i} < \text{n-prod.}_i$ ist, wobei $\text{n-e.pos.}_{>i}$ die Gesamtzahl an leeren Tragpositionen des/der stromabwärts des fraglichen Pufferförderers befindlichen Pufferförderer(s) ist, und wobei $\text{n-prod.}_i$ die Anzahl von auf dem fraglichen Pufferförderer vorhandenen Produkten ist, oder wenn es den Anschein hat, dass $\text{n-e.pos.}_{>i} = \text{n-prod.}_i$ und dass $\text{n-prod.}_i = 0$ ist, oder wenn es den Anschein hat, dass $\text{n-e.pos.}_{>i} = \text{n-prod.}_i$ und dass $\text{n-e.pos.}_{i+1} < \text{n-prod.}_i$ und dass $\text{n-prod.}_i > 0$ ist, wobei $\text{n-e.pos.}_{i+1}$ die Gesamtzahl an leeren Tragpositionen des stromabwärts des fraglichen Pufferförderers befindlichen Pufferförderers ist;
    - Transportieren des Produkts zu dem stromabwärts des fraglichen Pufferförderers befindlichen Pufferförderer, ohne auf die Ankunft eines nächsten Produkts auf dem fraglichen Pufferförderer zu warten, wenn es anhand der Verteilung von Produkten über die individuellen Pufferförderer gemäß Ermittlung durch das Ermittlungsmittel den Anschein hat, dass $\text{n-e.pos.}_{>i} > \text{n-pos.}_i$, wobei $\text{n-pos.}_i$ die Anzahl von Tragpositionen des fraglichen Pufferförderers ist, oder wenn es den Anschein hat, dass $\text{n-e.pos.}_{>i} > \text{n-prod.}_i$ ist und dass $\text{n-e.pos.}_{i+1} > \text{n-prod.}_i$ und dass $\text{n-e.pos.}_{>i} \leq \text{n-pos.}_i$ ist, oder wenn es den Anschein hat, dass $\text{n-e.pos.}_{>i} > \text{n-prod.}_i$ ist und dass $\text{n-prod.}_i = 0$ und dass $\text{n-e.pos.}_{>i} \leq \text{n-pos.}_i$ ist,
    - Transportieren des Produkts zu dem stromabwärts des fraglichen Pufferförderers befindlichen Pufferförderer und Stationärhalten des stromaufwärts des fraglichen Pufferförderers befindlichen Pufferförderers, wenn es anhand der Verteilung von Produkten über die individuellen Pufferförderer gemäß Ermittlung durch das Ermittlungsmittel den Anschein hat, dass $\text{n-e.pos.}_{>i} = \text{n-prod.}_i$ ist und dass $\text{n-e.pos.}_{i+1} \geq \text{n-prod.}_i$ und dass $\text{n-prod.}_i > 0$ ist, oder wenn es den Anschein hat, dass $\text{n-e.pos.}_{>i} > \text{n-prod.}_i$ ist und dass $\text{n-e.pos.}_{>i} \leq \text{n-pos.}_i$ ist und dass $\text{n-e.pos.}_{i+1} \leq \text{n-prod.}_i$ und dass $\text{n-prod.}_i > 0$ ist.

2.  Verfahren nach Anspruch 1, **gekennzeichnet durch** den Schritt des Freigebens des vorübergehenden Stopps des fraglichen Pufferförderers, der erfolgte, als das fragliche Produkt an der am weitesten stromaufwärts gelegenen Tragposition des fraglichen Mehrfach-Pufferförderers ankam, nachdem es anhand der Verteilung von Produkten über die individuellen Pufferförderer gemäß  Ermittlung **durch** das Ermittlungsmittel den Anschein hatte, dass die Gesamtzahl an leeren Tragpositionen des/der stromabwärts des fraglichen Pufferförderers befindlichen Pufferförderer(s) kleiner war als die Zahl der Produkte auf dem fraglichen Pufferförderer, wenn eine neue Ermittlung **durch** das Ermittlungsmittel zeigt, dass die am weitesten stromabwärts gelegene Tragposition des fraglichen Pufferförderers noch leer ist und ein Produkt auf der am weitesten stromabwärts gelegenen Tragposition des stromaufwärts des fraglichen Pufferförderers befindlichen Pufferförderers vorhanden ist.

3. Vorrichtung zum Puffern von Produkten zwischen einem Zufuhrförderer und einem Abfuhrförderer, insbesondere zur Verwendung in Kombination mit einem Verfahren nach einem der vorherigen Ansprüche, wobei die Vorrichtung Folgendes umfasst: individuelle End-to-End-Pufferförderer, von denen wenigstens einige Mehrfach-Pufferförderer sind, die jeweils eine Anzahl von Tragpositionen zum gleichzeitigen Tragen einer Anzahl von Produkten umfassen, die maximal gleich der Anzahl von Tragpositionen ist, Antriebsmittel zum individuellen Antreiben der Pufferförderer und Steuermittel zum Anlegen von Steuersignalen an die Antriebsmittel zum Füllen und Leeren der individuellen Pufferförderer durch individuelles Antreiben der Pufferförderer, wobei Ermittlungsmittel zum Ermitteln der Verteilung von Produkten über die individuellen Pufferförderer vorgesehen sind, wobei
die Steuermittel so ausgelegt sind, dass sie während des Transports von Produkten über die aufeinander folgenden Pufferförderer, nach dem Übertragen eines Produkts zu einem jeweiligen Mehrfach-Pufferförderer durch den stromaufwärts des fraglichen Pufferförderers befindlichen Pufferförderer, die folgenden Schritte ausführen:

- vorübergehendes Stoppen des fraglichen Pufferförderers, wenn das fragliche Produkt an der am weitesten stromaufwärts gelegenen Tragposition des fraglichen Mehrfach-Pufferförderers angekommen ist, wenn es anhand der Verteilung von Produkten über die individuellen Pufferförderer gemäß Ermittlung durch das Ermittlungsmittel den Anschein hat, dass $n\text{-}e.pos._{>i} < n\text{-}prod._i$ ist, wobei $n\text{-}e.pos._{>i}$ die Gesamtzahl an leeren Tragpositionen des/der stromabwärts des fraglichen Pufferförderers befindlichen Pufferförderer(s) ist, und wobei $n\text{-}prod._i$ die Anzahl von Produkten auf dem fraglichen Pufferförderer ist, oder wenn es den Anschein hat, dass $n\text{-}e.pos._{>i} = n\text{-}prod._i$ und dass $n\text{-}prod._i = 0$ ist,
oder wenn es den Anschein hat, dass $n\text{-}e.pos._{>i} = n\text{-}prod._i$ ist und dass $n\text{-}e.pos._{i+1} < n\text{-}prod._i$ und dass $n\text{-}prod._i > 0$ ist, wobei $n\text{-}e.pos._{i+1}$ die Gesamtzahl an leeren Tragpositionen des stromabwärts des fraglichen Pufferförderers befindlichen Pufferförderers ist;
- Transportieren des Produkts zu dem stromabwärts des fraglichen Pufferförderers befindlichen Pufferförderer, ohne auf die Ankunft eines nächsten Produkts auf dem fraglichen Pufferförderer zu warten, wenn es anhand der Verteilung von Produkten über die individuellen Pufferförderer gemäß Ermittlung durch das Ermittlungsmittel den Anschein hat, dass $n\text{-}e.pos._{>i} > n\text{-}pos._i$ ist, wobei $n\text{-}pos._i$ die Anzahl von Tragpositionen des fraglichen Pufferförderers ist, oder wenn es den Anschein hat, dass $n\text{-}e.pos._{>i} > n\text{-}prod._i$ ist und dass $n\text{-}e.pos._{i+1} > n\text{-}prod._i$ und dass $n\text{-}e.pos._{>i} \leq n\text{-}pos._i$ ist,
oder wenn es den Anschein hat, dass $n\text{-}e.pos._{>i} > n\text{-}prod._i$ ist und dass $n\text{-}prod._i = 0$ und dass $n\text{-}e.pos._{>i} \leq n\text{-}pos._i$ ist;
- Transportieren des Produkts zu dem stromabwärts des fraglichen Pufferförderers befindlichen Pufferförderer und Stationärhalten des stromaufwärts des fraglichen Pufferförderers befindlichen Pufferförderers, wenn es anhand der Verteilung von Produkten über die individuellen Pufferförderer gemäß Ermittlung durch das Ermittlungsmittel den Anschein hat, dass $n\text{-}e.pos._{>i} = n\text{-}prod._i$ ist und dass $n\text{-}e.pos._{i+1} \geq n\text{-}prod._i$ ist und dass $n\text{-}prod._i > 0$ ist,
oder wenn es den Anschein hat, dass $n\text{-}e.pos._{>i} > n\text{-}prod._i$ ist und dass $n\text{-}e.pos._{>i} \leq n\text{-}pos._i$ ist und dass $n\text{-}e.pos._{i+1} \leq n\text{-}prod._i$ und dass $n\text{-}prod._i > 0$ ist.

4. Vorrichtung nach Anspruch 3, **dadurch gekennzeichnet, dass** die Steuermittel zum Freigeben des vorübergehenden Stopps des fraglichen Pufferförderers ausgelegt sind, der erfolgte, als das fragliche Produkt an der am weitesten stromaufwärts gelegenen Tragposition des fraglichen Mehrfach-Pufferförderers ankam, nachdem es anhand der Verteilung von Produkten über die individuellen Pufferförderer gemäß Ermittlung durch das Ermittlungsmittel den Anschein hatte, dass die Gesamtzahl an leeren Tragpositionen des/der stromabwärts des fraglichen Pufferförderers befindlichen Pufferförderer(s) kleiner war als die Zahl der Produkte auf dem fraglichen Pufferförderer, wenn eine neue Ermittlung durch das Ermittlungsmittel zeigt, dass die am weitesten stromabwärts gelegene Tragposition des fraglichen Pufferförderers noch leer ist und ein Produkt auf der am weitesten stromabwärts gelegenen Tragposition des stromaufwärts des fraglichen Pufferförderers befindlichen Pufferförderers vorhanden ist.

5. Vorrichtung nach Anspruch 3 oder 4, **dadurch gekennzeichnet, dass** die Länge der individuellen Pufferförderer vom Abfuhrförderer zum Zufuhrförderer gleich bleibt oder zunimmt.

**6.** Vorrichtung nach einem der Ansprüche 3-5, **dadurch gekennzeichnet, dass** die Länge eines Mehrfach-Pufferförderers gleich der Länge einer Anzahl von stromabwärtigen Pufferförderern ist, die mit dem Mehrfach-Pufferförderer verbunden sind.

**7.** Vorrichtung nach einem der Ansprüche 3-6, **dadurch gekennzeichnet, dass** der am weitesten stromabwärts gelegene Pufferförderer ein Einfach-Pufferförderer ist.

**8.** Vorrichtung nach einem der Ansprüche 4-7, **dadurch gekennzeichnet, dass** die Ermittlungsmittel Sensormittel umfassen, um die Steuermittel mit Informationen über die Position von Produkten auf dem Zufuhrförderer zu versorgen.

**9.** Vorrichtung nach einem der Ansprüche 3-8, **dadurch gekennzeichnet, dass** die Ermittlungsmittel die Verteilung von Produkten über die individuellen Pufferförderer auf der Basis von Informationen über die individuellen Antriebsaktionen durch das Antriebsmittel der Pufferförderer ermitteln.


## Revendications

**1.** Procédé d'utilisation d'un dispositif de séparation de produits entre un convoyeur d'alimentation et un convoyeur de déchargement, ledit dispositif comprenant des convoyeurs de séparation individuels de bout en bout, au moins une partie d'entre eux étant des convoyeurs des séparation multiples, qui comprennent chacun un certain nombre de positions de support destinées à porter simultanément un nombre de produits au maximum égal au nombre de positions de support, des moyens d'entraînement pour entraîner individuellement les convoyeurs de séparation et des moyens de commande pour délivrer des signaux de commande aux moyens d'entraînement afin de remplir et de vider les convoyeurs de séparation individuels en entraînant individuellement les convoyeurs de séparation, ledit procédé comprenant les étapes successives consistant à :

- recevoir des produits du convoyeur d'alimentation sur le convoyeur de séparation le plus en amont du dispositif de séparation,
- acheminer les produits depuis le convoyeur de séparation le plus en amont du dispositif de séparation jusqu'au convoyeur de séparation le plus en aval par l'intermédiaire des convoyeurs de séparation successifs, et
- délivrer les produits du convoyeur de séparation le plus en aval au convoyeur de déchargement,
- déterminer la répartition des produits sur les convoyeurs de séparation individuels grâce à des moyens de détermination,

dans lequel les étapes suivantes doivent être effectuées pendant que les produits sont transportés par l'intermédiaire des convoyeurs de séparation successifs, après qu'un produit a été transféré à un convoyeur de séparation multiple respectif par le convoyeur de séparation placé en amont du convoyeur de séparation en question :
- arrêter le convoyeur de séparation en question temporairement une fois que le produit en question est arrivé à la position de support la plus en amont du convoyeur de séparation multiple en question s'il apparaît, d'après la répartition des produits sur les convoyeurs de séparation individuels déterminée par les moyens de détermination, que $n\text{-}e.pos._{>i} < n\text{-}prod._i$, où $n\text{-}e.pos._{>i}$ est le nombre total de positions de support vides du ou des convoyeurs de séparation placés en aval du convoyeur de séparation en question et où $n\text{-}prod._i$ est le nombre de produits se trouvant sur le convoyeur de séparation en question,
ou s'il apparaît que $n\text{-}e.pos._{>i} = n\text{-}prod._i$ et que $n\text{-}prod._i = 0$,
ou s'il apparaît que $n\text{-}e.pos._{>i} = n\text{-}prod._i$ et que $n\text{-}e.pos._{>i+1} < n\text{-}prod._i$ et que $n\text{-}prod._i > 0$, où $ne.pos._{>i+1}$ est le nombre total de positions de support vides du convoyeur de séparation placé en aval du convoyeur de séparation en question ;
- transporter le produit jusqu'au convoyeur de séparation placé en aval du convoyeur de séparation en question, sans attendre l'arrivée d'un produit suivant sur le convoyeur de séparation en question, s"il apparaît, d'après la répartition des produits sur les convoyeurs de séparation individuels déterminée par les moyens de détermination, que $n\text{-}e.pos._{>i} > n.pos._i$, où $n.pos._i$ est le nombre de positions de support du convoyeur de séparation en question,
ou s'il apparaît que $n\text{-}e.pos._{>i} > n\text{-}prod._i$ et que $n\text{-}e.pos._{>i+1} > n\text{-}prod._i$ et que $n\text{-}e.pos._{>i} \leq n\text{-}pos._i$,
ou s'il apparaît que $n\text{-}e.pos._{>i} > n\text{-}prod._i$ et que $n\text{-}prod._i = 0$ et que $n\text{-}e.pos._{>i} \leq n\text{-}pos._i$ ;
- transporter le produit jusqu'au convoyeur de séparation placé en aval du convoyeur de séparation en question et maintenir le convoyeur de séparation placé en amont du convoyeur de séparation en question stationnaire, s'il apparaît, d'après la répartition des produits sur les convoyeurs de séparation individuels déterminée par les moyens de détermination, que n-e.pos.$>_i$ = n-prod.$_i$ et que n-e.pos.$_{i+1}$ ≥n-prod.$_i$ et que n-prod.$_i$ > 0,
ou s'il apparaît que n-e.pos.$_{>i}$ > n-prod.$_i$ et que n-e.pos.$_{>i}$ ≤ n-pos.$_i$ et que n-e.pos.$_{i+1}$ ≤ n-prod.$_i$ et que n-prod.$_i$ > 0.

**2.** Procédé selon la revendication 1, **caractérisé en ce qu'**il comprend l'étape qui consiste à annuler l'arrêt temporaire du convoyeur de séparation en question ayant été activé une fois que le produit en question est arrivé à la position de support la plus en amont du convoyeur de séparation multiple en question après qu'il est apparu, d'après la répartition des produits sur les convoyeurs de séparation individuels déterminée par les moyens de détermination, que le nombre total de positions de support vides du ou des convoyeurs de séparation disposés en aval du convoyeur de séparation en question était inférieur au nombre de produits sur le convoyeur de séparation en question, si une nouvelle détermination effectuée par les moyens de détermination montre que la position de support la plus en aval du convoyeur de séparation en question est toujours vide et qu'un produit se trouve sur la position de support la plus en aval du convoyeur de séparation placé en amont du convoyeur de séparation en question.

**3.** Dispositif pour séparer des produits entre un convoyeur d'alimentation et le convoyeur de déchargement, destiné en particulier à être associé à un procédé selon l'une quelconque des revendications précédentes, ledit dispositif comprenant des convoyeurs de séparation individuels de bout en bout, au moins une partie d'entre eux étant des convoyeurs des séparations multiples, qui comprennent chacun un certain nombre de positions de support destinées à porter simultanément un nombre de produits au maximum égal au nombre de positions de support, des moyens d'entraînement pour  entraîner individuellement les convoyeurs de séparation et des moyens de commande pour délivrer des signaux de commande aux moyens d'entraînement afin de remplir et de vider les convoyeurs de séparation individuels en entraînant individuellement les convoyeurs de séparation, dans lequel des moyens de détermination sont prévus pour déterminer la répartition des produits sur les convoyeurs de séparation individuels, dans lequel les moyens de commande sont aptes à effectuer, pendant que les produits sont transportés par l'intermédiaire des convoyeurs de séparation successifs, après qu'un produit a été transféré à un convoyeur de séparation multiple respectif par le convoyeur de séparation placé en amont du convoyeur de séparation en question, les étapes consistant à :

- arrêter le convoyeur de séparation en question temporairement une fois que le produit en question est arrivé à la position de support la plus en amont du convoyeur de séparation multiple en question s'il apparaît, d'après la répartition des produits sur les convoyeurs de séparation individuels déterminée par les moyens de détermination, que n-e.pos.$_{>i}$ < n-prod.$_i$, où n-e.pos.$_{>i}$ est le nombre total de positions de support vides du ou des convoyeurs de séparation placés en aval du convoyeur de séparation en question et où n-prod.$_i$ est le nombre de produits sur le convoyeur de séparation en question,
ou s'il apparaît que n-e.pos.$_{>i}$ = n-prod.$_i$ et que n-prod.$_i$ = 0,
ou s'il apparaît que n-e.pos.$_{>i}$ = n-prod.$_i$ et que n-e.pos.$_{i+1}$ < n-prod.$_i$ et que n-prod.$_i$ > 0, où ne.pos.$_{i+1}$ est le nombre total de positions de support vides du convoyeur de séparation placé en aval du convoyeur de séparation en question ;
- transporter le produit jusqu'au convoyeur de séparation placé en aval du convoyeur de séparation en question, sans attendre l'arrivée d'un produit suivant sur le convoyeur de séparation en question, s'il apparaît, d'après la répartition des produits sur les convoyeurs de séparation individuels déterminée par les moyens de détermination, que n-e.pos.$_{>i}$ > n.pos.$_i$, où n.pos.$_i$ est le nombre de positions de support du convoyeur de séparation en question,
ou s'il apparaît que n-e.pos.$_{>i}$ > n-prod.$_i$ et que n-e.pos.$>_{i+1}$ > n-prod.$_i$ et que n-e.pos.$_{>i}$ ≤ n-pos.$_i$,
ou s'il apparaît que n-e.pos.$_{>i}$ > n-prod.$_i$ et que n-prod.$_i$ = 0 et que n-e.pos.$_{>i}$ ≤ n-pos.$_i$ ;
- transporter le produit jusqu'au convoyeur de séparation placé en aval du convoyeur de séparation en question et maintenir le convoyeur de séparation placé en amont du convoyeur de séparation en question stationnaire, s'il apparaît, d'après la répartition des produits sur les convoyeurs de séparation individuels déterminée par les moyens de détermination, que n-e.pos.$_{>i}$ = n-prod.$_i$ et que n-e.pos.$_{>i+1}$ ≥n-prod. et que n-prod.$_i$ > 0,
ou s'il apparaît que n-e.pos.$_{>i}$ > n-prod.$_i$ et que n-e.pos.$_{>i}$ ≤ n-pos.$_i$ et que n-e.pos.$_{i+1}$ ≤ n-prod.$_i$ et que n-prod.$_i$ > 0.

**4.** Dispositif selon la revendication 3, **caractérisé en ce que** les moyens de commande sont aptes à annuler l'arrêt temporaire du convoyeur de séparation  en question ayant pris effet une fois que le produit en question est arrivé à la position de support la plus en amont du convoyeur de séparation multiple en question après qu'il est apparu, d'après la répartition des produits sur les convoyeurs de séparation individuels déterminée par les moyens de détermination, que le nombre total de positions de support vides du ou des convoyeurs de séparation disposés en aval du convoyeur de séparation en question était inférieur au nombre de produits sur le convoyeur de séparation en question, si une nouvelle détermination effectuée par les moyens de détermination montre que la position de support la plus en aval du convoyeur de séparation en question est toujours vide et qu'un produit se trouve sur la position de support la plus en aval du convoyeur de séparation placé en amont du convoyeur de séparation en question.

**5.** Dispositif selon la revendication 3 ou 4, **caractérisé en ce que** la longueur des convoyeurs de séparation individuels du convoyeur de déchargement au convoyeur d'alimentation reste identique ou augmente.

**6.** Dispositif selon l'une quelconque des revendications 3 à 5, **caractérisé en ce que** la longueur d'un convoyeur de séparation multiple est égale à la longueur de plusieurs convoyeurs de séparation aval reliés audit convoyeur de séparation multiple.

**7.** Dispositif selon l'une quelconque des revendications 3 à 6, **caractérisé en ce que** le convoyeur de séparation le plus en aval est un convoyeur de séparation simple.

**8.** Dispositif selon l'une quelconque des revendications 4 à 7, **caractérisé en ce que** les moyens de détermination comprennent des moyens formant capteur destinés à fournir aux moyens de commande des informations concernant la position des produits sur le convoyeur d'alimentation.

**9.** Dispositif selon l'une quelconque des revendications 3 à 8, **caractérisé en ce que** les moyens de détermination déterminent la répartition des produits sur les convoyeurs de séparation individuels sur la base des informations concernant les actions d'entraînement individuelles effectuées par les moyens d'entraînement des convoyeurs de séparation.

FIG. 1

FIG. 2

FIG.3

EP 1 789 349 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4227607 A